# EUROPÄISCHE PATENTSCHRIFT

(11) **EP 2 287 028 B1**
(45) Veröffentlichungstag und Bekanntmachung des Hinweises auf die Patenterteilung: **12.06.2013**
(21) Anmeldenummer: 10007888.0
(22) Anmeldetag: 29.07.2010
(51) Int. Cl.: B60J 7/16, F41H 5/22

(54) **Fahrzeug mit dachseitigem Lukendeckel**
Vehicle with manhole hatch in roof
Véhicule avec un hublot dans le toit

(30) Priorität: 21.08.2009 DE 102009038355
(43) Veröffentlichungstag der Anmeldung: 23.02.2011
(73) Patentinhaber: Rheinmetall Landsysteme GmbH, 24107 Kiel (DE)
(72) Erfinder: Chromicz, Bartosz, 24107 Kiel (DE)
(74) Vertreter: Dietrich, Barbara

(56) Entgegenhaltungen:
- EP-A2- 1 361 409
- DE-A1- 4 333 609
- DE-A1-102004 059 016
- DE-U- 1 907 290
- GB-A- 2 243 346

## Beschreibung

### BESCHREIBUNG

### Fahrzeug

Die Erfindung betrifft ein Fahrzeug, in dem Platz für mindestens zwei nebeneinander sitzende oder stehende Personen ist, wobei das Fahrzeug dachseitig oberhalb der beiden Personen mindestens eine durch einen Lukendeckel verschließbare Lukenöffnung aufweist.

Bei gepanzerten Fahrzeugen ist es bekannt, dachseitig zum Ein- und Aussteigen des Fahrers oder des Kommandanten des Fahrzeuges Klappluken vorzusehen, bei denen entsprechende Lukenöffnungen durch Lukendeckel verschlossen werden. Dabei sind die Lukendeckel um eine waagerechte Schwenkachse in der Regel nach vorne klappbar ausgebildet.

Zur Verbesserung der Tarneigenschaften gepanzerter Fahrzeuge mit dachseitigen Luken ist es beispielsweise aus der DE 10 2004 059 016 B4 bekannt, statt Klappluken sogenannte Schiebeluken zu verwenden, bei denen der jeweilige Lukendeckel oberhalb des Randes der entsprechenden Lukenöffnung horizontal verschiebbar ausgebildet ist.

Ferner sind beispielsweise aus der Druckschrift DE 29 49 680 C2 Luken bekannt, bei denen der Lukendeckel horizontal um eine senkrechte Schwenkachse von einer geschlossenen in eine geöffnete Position gedreht wird.

Bei den bekannten Fahrzeugen sind in der Regel für den Fahrer und den Beifahrer (Kommandanten) des gepanzerten Fahrzeuges jeweils separate Luken vorgesehen, sodass die Luken vom Fahrer und vom Kommandanten einzeln bedient werden müssen. Außerdem engt der üblicherweise zwischen den beiden Lukenöffnungen befindliche Steg des Fahrzeuges den Durchgang ein und hindert die Besatzung an einem schnellen Ein-und Aussteigen des Fahrzeuges.

Dieses gilt insbesondere auch für gepanzerte Radfahrzeuge, die unter der Bezeichnung GeFaS (Geschütztes Fahrzeugsystem) von der Firma Rheinmetall AG, Düsseldorf, entwickelt wurden und unter anderem im Internet veröffentlicht sind. Auch bei diesen Fahrzeugen, bei denen der Fahrer und der Kommandant seitlich nebeneinander sitzen, ist dachseitig für jede der beiden Personen eine getrennte Lukenöffnung vorgesehen, die durch jeweils einen eigenen klappbaren Lukendeckel verschließbar ist.

Der Erfindung liegt die Aufgabe zugrunde, ein Fahrzeug der eingangs erwähnten Art anzugeben, bei dem die Luke derart ausgebildet ist, dass im Bedarfsfall ein schnelles Ein-und Aussteigen der Mannschaft in oder aus dem Fahrzeug möglich ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass für den Fahrer und den neben ihm sitzenden Kommandanten nur eine einzige Lukenöffnung vorgesehen ist, deren Abmessungen derart gewählt ist, dass bei vollständig geöffnetem Lukendeckel beide Personen gleichzeitig durch die Lukenöffnung in den Innenraum des Fahrzeuges einsteigen oder aus dem Innenraum des Fahrzeuges aussteigen können. Die Länge der Luke sollte bevorzugt mindestens 90 cm betragen und eine Breite von mindestens 40 cm aufweisen. Dabei ist der Lukendeckel um 360° drehbar und derart ausgebildet, dass er eine selektive Anpassung der Öffnungsposition zulässt, so dass bei einer Drehung des Lukendeckels von der geschlossenen Position um 180° sich eine vollständig geöffnete Position ergibt, bei der sowohl der Kommandant als auch der Fahrer gleichzeitig ein- und aussteigen können. Hingegen werden bei einer Drehung des Lukendeckels um 90° bzw. um 270° lediglich eine Einstiegs- oder Ausstiegsöffnung nur für den Kommandanten bzw. nur für den Fahrer freigelassen. Erreicht werden diese wahlweise einstellbaren Öffnungspositionen vorzugsweise dadurch, dass die Schwenkachse des Lukendeckels mittig etwas vor oder hinter der Lukenöffnung angeordnet ist.

Damit die Mannschaft beim Ein- und Aussteigen durch die Lukenöffnung möglichst nicht behindert wird, hat es sich als vorteilhaft erwiesen, wenn die Lukenöffnung eine Länge von mindestens 110 cm und eine Breite von mindestens 60 cm aufweist.

Um Verletzungen der Mannschaft etwa beim Ein- und Aussteigen durch die Lukenöffnung zu vermeiden, ist bei einer Ausführungsform der Erfindung vorgesehen, wenn sowohl die seitlichen Bereiche der Lukenöffnung als auch in dem Lukendeckel angeordnete Aussparungen abgerundet ausgebildet sind, derart, dass sich bei den einzelnen Öffnungspositionen des Lukendeckels im wesentlichen runde oder ovale Randkonturen der Ein- oder Ausstiegsöffnungen ergeben.

Bei einer weiteren bevorzugten Ausführungsform der Erfindung ist vorgesehen, dass der die Lukenöffnung übergreifende Lukendeckel im wesentlichen die gleiche Randkontur wie die Lukenöffnung aufweist.

Der Lukendeckel sollte sowohl in der geschlossenen Position als auch in den Öffnungspositionen bei 90°, 180° und 270° jeweils durch lösbare Arretiermittel fixierbar sein.

Weitere Einzelheiten und Vorteile der Erfindung ergeben sich aus den folgenden, anhand von Figuren erläuterten Ausführungsbeispielen. Es zeigen:
- Fig. 1: eine Draufsicht auf ein erfindungsgemäßes Fahrzeug im Bereich einer Luke, wobei der Lukendeckel die Lukenöffnung vollständig verschließt;
- Fig. 2 eine: Fig. 1 entsprechende Ansicht, wobei der Lukendeckel um 90° gedreht ist, sodass die Luke für den Kommandanten geöffnet und für den Fahrer geschlossen ist;
- Fig.: 3 eine Fig. 1 entsprechende Luke, wobei der Lukendeckel um 180° gedreht ist, so- dass die Luke für den Kommandanten und den Fahrer geöffnet ist und
- Fig. 4 eine: Fig. 3 entsprechende Ansicht, wobei der Lukendeckel um 270° gedreht ist, sodass die Luke für den Fahrer geöffnet und für den Kommandanten geschlossen ist.

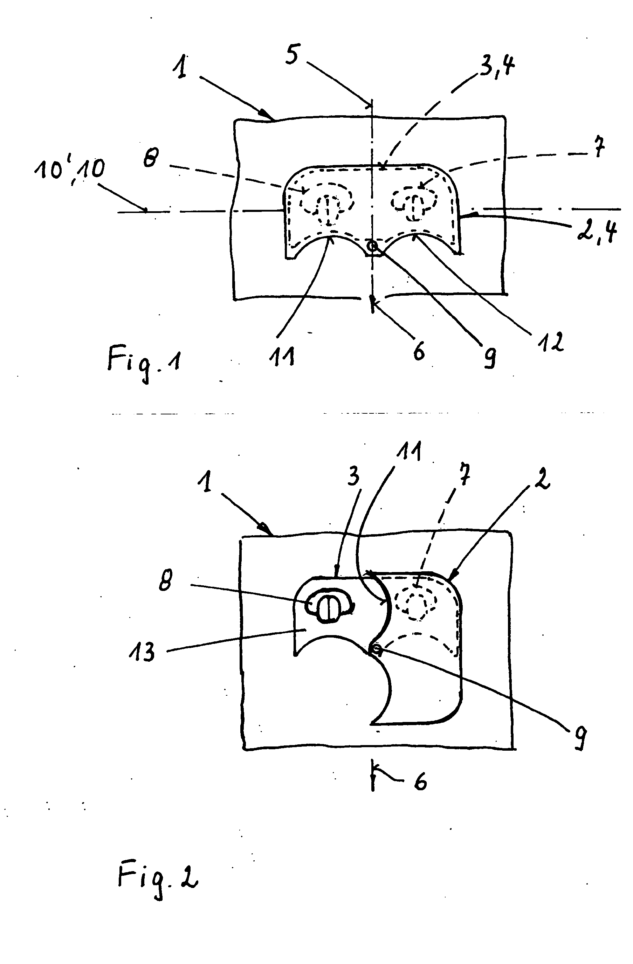

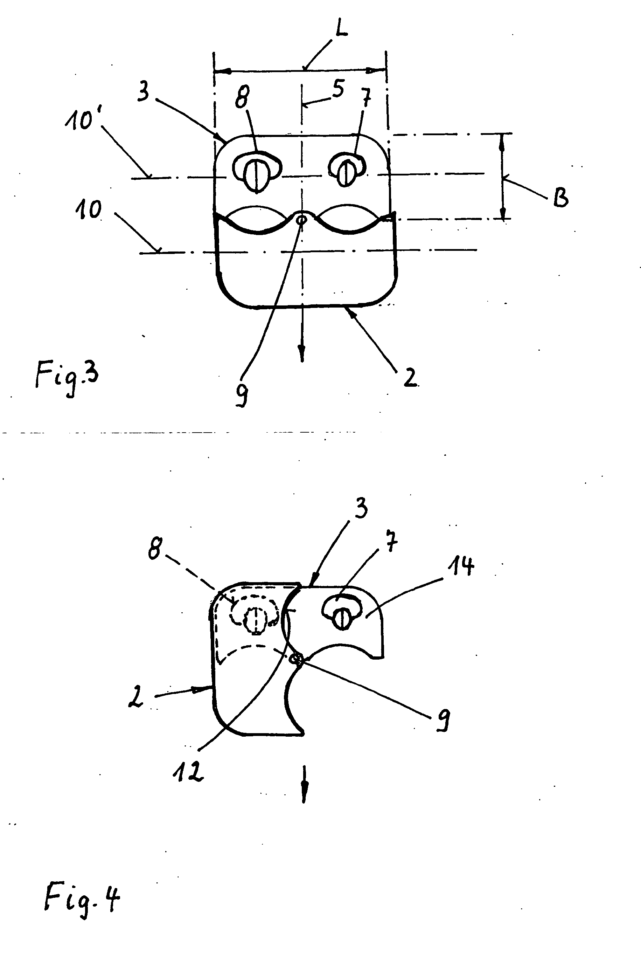

In Fig. 1 sind mit 1 ein dachseitiger Bereich eines sich in Richtung des Pfeils 6 bewegenden gepanzerten Fahrzeuges bezeichnet, an dem eine aus Lukendeckel 2 und Lukenöffnung 3 bestehende Luke 4 angeordnet ist. Dabei ist die Längsachse 10' der Lukenöffnung 3 quer zur Längsachse 5 des Fahrzeuges 1 gerichtet. Bei einem Ausführungsbeispiel betrug die Länge L der Lukenöffnung 110 cm und die Breite B 60 cm (vgl. auch Fig. 3).

In dem Fahrzeug 1 befinden sich unter anderem ein Fahrer 7 und ein Kommandant 8, die, in Bezug auf die Längsachse 5 des Fahrzeuges 1, nebeneinander und unterhalb der Luke 4 sitzen.

Fig. 1 zeigt die vollständig geschlossene Position der Luke 4.

Soll die Luke 4 geöffnet werden, so wird der Lukendeckel 2 zunächst um etwa 15 cm entlang einer vor der Lukenöffnung 3 befindlichen, etwa mittig angeordneten Schwenkachse 9 gehoben, bis sich der Lukendeckel 2 oberhalb eines nicht dargestellten oberen Randes der Lukenöffnung 3 befindet. Anschließend wird der Lukendeckel 2 um 90° zur Fahrerseite hin geschwenkt (Fig. 2). In dieser Position kann das Führen über Luke durch den Kommandanten 8 erfolgen, wobei der Fahrer 7 von dem Lukendeckel 2 weiterhin bedeckt und somit geschützt wird.

Da der Lukendeckel 2 in Richtung seiner Längsachse 10 randseitig zwei nebeneinander angeordnete Aussparungen 11, 12 aufweist, wird der Kommandant 8 in der in Fig. 2 dargestellten Position der Luke 4 durch die mit 11 bezeichnete abgerundete Aussparung des Lukendeckels 2 seitlich gestützt.

Wird der Lukendeckel 2 um weitere 90° gedreht (Fig. 3), ist die Lukenöffnung 3 vollständig geöffnet, durch welche der Kommandant sowie der Fahrer gleichzeitig schauen können oder große Gegenstände hindurchgereicht werden können. Außerdem ist jetzt ein schnelles Ein- und Aussteigen in und aus dem Fahrzeug 1 möglich.

Bei einer Drehung um weitere 90° ergibt sich die in Fig. 4 dargestellte Position der Luke 4, bei der ein Fahren über Luke durch den Fahrer 7 erfolgen kann, wobei der Kommandant 8 von dem Lukendeckel 2 bedeckt und somit geschützt wird. In diesem Fall wird der Fahrer 7 durch die mit 12 bezeichnete abgerundete Aussparung seitlich gestützt.

Die Erfindung ist selbstverständlich nicht auf das vorstehend beschriebene Ausführungsbeispiel beschränkt. So ist es beispielsweise auch denkbar, die Schwenkachse heckseitig hinter der Lukenöffnung anzuordnen, sodass der Lukendeckel nicht vor der Lukenöffnung, sondern hinter dieser horizontal gedreht werden kann.

Außerdem kann auf einfache Weise eine Halterung für Wirkmittel auf dem Lukendeckel befestigt werden, wobei die Wirkmittel dann von dem Kommandanten oder von dem Fahrer bedient werden.

### Bezugszeichenliste

- 1: dachseitiger Bereich, Fahrzeug
- 2: Lukendeckel
- 3: Lukenöffnung
- 4: Luke
- 5: Längsachse (Fahrzeug)
- 6: Pfeil
- 7: Fahrer, Person
- 8: Kommandant, Person
- 9: Schwenkachse
- 10: Längsachse(Lukendeckel)
- 10': Längsachse (Lukenöffnung)
- 11, 12: Aussparungen
- 13, 14: Ein- oder Ausstiegsöffnungen
- L: Länge
- B: Breite

## Patentansprüche

1. Fahrzeug, in dem Platz für mindestens zwei nebeneinander sitzende oder stehende Personen (7, 8) ist, wobei das Fahrzeug (1) dachseitig oberhalb der beiden Personen (7, 8) mindestens eine durch einen Lukendeckel (2) verschließbare Lukenöffnung (3) aufweist, **dadurch gekennzeichnet, dass**
a) die Abmessungen der Lukenöffnung derart gewählt sind, dass bei vollständig geöffnetem Lukendeckel die mindestens zwei Personen gleichzeitig durch die Lukenöffnung in den Innenraum des Fahrzeuges ein- und aussteigen können,
b) die Schwenkachse (9) des Lukendeckels (2) etwa mittig vor oder hinter der Lukenöffnung (3) angeordnet ist, derart, dass der Lukendeckel (2) zwischen der vollständig geschlossenen Position und der vollständig geöffneten Position bei 90° und 270° eine Zwischenposition einnimmt, bei welcher der Lukendeckel (2) jeweils einen Teilbereich der Lukenöffnung (3) freilässt, der ausreicht, dass jeweils eine der beiden nebeneinander befindlichen Personen (7, 8) durch die sich ergebende Ein- oder Ausstiegsöffnung (13, 14) in das Fahrzeug (1) ein- oder aus dem Fahrzeug (1) aussteigen kann.

2. Fahrzeug nach Anspruch 1, **dadurch gekennzeichnet, dass** der Lukendeckel (2) ist entlang einer senkrechten Schwenkachse (9) höhenverstellbar und nach einem Anheben des Lukendeckels (2) um die Schwenkachse (9) von einer vollständig geschlossenen Position über eine vollständig geöffnete Position bei einem Winkel von 180° wieder in die vollständig geschlossene Position um 360° drehbar ist

3. Fahrzeug nach Anspruch 1 oder 2, **dadurch gekennzeichnet, dass** es sich bei dem Fahrzeug (1) um ein gepanzertes Fahrzeug handelt, bei dem sich die Lukenöffnung (3) oberhalb des Fahrersitzes und oberhalb des seitlich neben diesem befindlichen Kommandantensitz befindet, wobei die Längsachse (10') der Lukenöffnung (3) quer zur Längsachse (5) des Fahrzeuges (1) angeordnet ist.

4. Fahrzeug nach einem der Ansprüche 1 bis 3, **dadurch gekennzeichnet, dass** die Lukenöffnung (3) bevorzugt mindestens eine Länge von 110 cm und mindestens eine Breite von 60 cm aufweist.

5. Fahrzeug nach Anspruch 4, **dadurch gekennzeichnet, dass** die Lukenöffnung (3) weist eine Länge (L) von wenigstens 90 cm und eine Breite (B) von wenigstens 40 cm aufweist.

6. Fahrzeug nach einem der Ansprüche 1 bis 5, **dadurch gekennzeichnet, dass** der Lukendeckel (2) in Richtung seiner Längsachse (10) randseitig zwei nebeneinander angeordnete Aussparungen (11, 12) aufweist.

7. Fahrzeug nach Anspruch 6, **dadurch gekennzeichnet, dass** sowohl die seitlichen Bereiche der Lukenöffnung (3) als auch die in dem Lukendeckel (2) angeordneten Aussparungen (11, 12) abgerundet ausgebildet sind, derart, dass sich in den Zwischenpositionen des Lukendeckels (2) im wesentlichen runde oder ovale Randkonturen der Ein- oder Ausstiegsöffnungen (13, 14) ergeben.

8. Fahrzeug nach einem der Ansprüche 1 bis 7, **dadurch gekennzeichnet, dass** der die Lukenöffnung (3) übergreifende Lukendeckel (2) im wesentlichen die gleiche Randkontur wie die Lukenöffnung (3) aufweist.

9. Fahrzeug nach einem der Ansprüche 1 bis 8, **dadurch gekennzeichnet, dass** der Lukendeckel (2) sowohl in der geschlossenen Position als auch in den Öffnungspositionen bei 90°, 180° und 270° jeweils durch Arretiermittel fixierbar ist.

## Claims

1. Vehicle in which there is space for at least two persons (7, 8) sitting or standing adjacent to one another, wherein the vehicle (1) has, on a roof above the two persons (7, 8), at least one hatch opening (3) which can be closed off by a hatch cover (2), **characterized in that**
a) the dimensions of the hatch opening are selected such that, when the hatch cover is fully open, the at least two persons can enter and exit the interior of the vehicle simultaneously through the hatch opening,
b) the pivot axle (9) of the hatch cover (2) is arranged substantially centrally in front of or behind the hatch opening (3), in such a way that the hatch cover (2), between the fully closed position and the fully open position, assumes at 90° and 270° an intermediate position in which the hatch cover (2) exposes in each case a partial region of the hatch opening (3) which is sufficient for in each case one of the two persons (7, 8) situated adjacent to one another to enter the vehicle (1) or exit the vehicle (1) through the resulting entry or exit opening (13, 14).

2. Vehicle according to Claim 1, **characterized in that** the hatch cover (2) is adjustable in height along a vertical pivot axle (9) and, after a raising of the hatch cover (2), can be rotated about the pivot axle (9) through 360° from a fully closed position via a fully open position at an angle of 180° and back into the fully closed position.

3. Vehicle according to Claim 1 or 2, **characterized in that** the vehicle (1) is an armoured vehicle in which the hatch opening (3) is situated above the driver's seat and above the commander's seat situated laterally adjacent thereto, wherein the longitudinal axis (10') of the hatch opening (3) is arranged transversely with respect to the longitudinal axis (5) of the vehicle (1).

4. Vehicle according to one of Claims 1 to 3, **characterized in that** the hatch opening (3) preferably has at least a length of 110 cm and at least a width of 60 cm.

5. Vehicle according to Claim 4, **characterized in that** the hatch opening (3) has a length (L) of at least 90 cm and a width (B) of at least 40 cm.

6. Vehicle according to one of Claims 1 to 5, **characterized in that** the hatch cover (2) has, on an edge, two cutouts (11, 12) arranged adjacent one another in the direction of its longitudinal axis (10).

7. Vehicle according to Claim 6, **characterized in that** both the lateral regions of the hatch opening (3) and also the cutouts (11, 12) arranged in the hatch cover (2) are of rounded form, such that substantially circular or oval edge contours of the entry or exit openings (13, 14) are generated in the intermediate positions of the hatch cover (2).

8. Vehicle according to one of Claims 1 to 7, **characterized in that** the hatch cover (2) which engages over the hatch opening (3) has substantially the same edge contour as the hatch opening (3).

9. Vehicle according to one of Claims 1 to 8, **characterized in that** the hatch cover (2) can be fixed in each case by arresting means both in the closed position and also in the open positions at 90°, 180° and 270°.

## Revendications

1. Véhicule accommodant au moins deux personnes (7, 8) assises ou debout l'une à côté de l'autre, le véhicule (1) présentant, au niveau du toit, au-dessus des deux personnes (7, 8), au moins une ouverture de hublot (3) pouvant être fermée par un couvercle de hublot (2),
**caractérisé en ce que**
a) les dimensions de l'ouverture de hublot sont choisies de telle sorte que lorsque le couvercle de hublot est complètement ouvert, les au moins deux personnes puissent entrer et sortir simultanément par l'ouverture de hublot dans et hors de l'habitacle du véhicule,
b) l'axe de pivotement (9) du couvercle de hublot (2) est disposé approximativement centralement devant ou derrière l'ouverture de hublot (3) de telle sorte que le couvercle de hublot (2) adopte une position intermédiaire entre la position complètement fermée et la position complètement ouverte à 90° et 270°, à laquelle le couvercle de hublot (2) libère à chaque fois une région partielle de l'ouverture de hublot (3) qui est suffisante pour que l'une des deux personnes (7, 8) se trouvant l'une à côté de l'autre puisse à chaque fois entrer dans le véhicule (1) ou sortir du véhicule (1) par l'ouverture d'entrée ou de sortie (13, 14) ainsi produite.

2. Véhicule selon la revendication 1, **caractérisé en ce que** le couvercle de hublot (2) peut être réglé en hauteur le long d'un axe de pivotement vertical (9) et après le soulèvement du couvercle de hublot (2) autour de l'axe de pivotement (9), peut être tourné, depuis une position complètement fermée en passant par une position complètement ouverte à un angle de 180°, à nouveau dans la position complètement fermée à 360°.

3. Véhicule selon la revendication 1 ou 2, **caractérisé en ce que** le véhicule (1) est un véhicule blindé dans lequel l'ouverture de hublot (3) est située au-dessus du siège du conducteur et au-dessus du siège du commandant se trouvant latéralement à côté de celui-ci, l'axe longitudinal (10') de l'ouverture de hublot (3) étant disposé transversalement à l'axe longitudinal (5) du véhicule (1).

4. Véhicule selon l'une quelconque des revendications 1 à 3, **caractérisé en ce que** l'ouverture de hublot (3) présente de préférence au moins une longueur de 110 cm et au moins une largeur de 60 cm.

5. Véhicule selon la revendication 4, **caractérisé en ce que** l'ouverture de hublot (3) présente une longueur (L) d'au moins 90 cm et une largeur (B) d'au moins 40 cm.

6. Véhicule selon l'une quelconque des revendications 1 à 5, **caractérisé en ce que** le couvercle de hublot (2) présente, dans la direction de son axe longitudinal (10), du côté du bord, deux évidements disposés l'un à côté de l'autre (11, 12).

7. Véhicule selon la revendication 6, **caractérisé en ce que** les régions latérales de l'ouverture de hublot (3) ainsi que les évidements (11, 12) disposés dans le couvercle de hublot (2) sont réalisés de manière arrondie, de manière à obtenir des contours des bords essentiellement ronds ou ovales des ouvertures d'entrée ou de sortie (13, 14) dans les positions intermédiaires du couvercle de hublot (2).

8. Véhicule selon l'une quelconque des revendications 1 à 7, **caractérisé en ce que** le couvercle de hublot (2) venant en prise par-dessus l'ouverture de hublot (3) présente essentiellement le même contour des bords que l'ouverture de hublot (3).

9. Véhicule selon l'une quelconque des revendications 1 à 8, **caractérisé en ce que** le couvercle de hublot (2) peut être fixé à la fois dans la position fermée et dans la position ouverte à 90°, 180° et 270°, à chaque fois par des moyens de blocage.
